# FASCICULE DE BREVET EUROPEEN

(11) **EP 1 104 527 B1**
(45) Date de publication et mention de la délivrance du brevet: **02.01.2002**
(21) Numéro de dépôt: 99936653.7
(22) Date de dépôt: 30.07.1999
(51) Int. Cl.: F16L 11/08, F16L 11/16

(54) **CONDUITE FLEXIBLE RESISTANTE A FLUAGE LIMITE DE LA GAINE D'ETANCHEITE**
BIEGSAME ROHRLEITUNG MIT KRIECHBEGRENZTER DICHTSCHICHT
RESISTANT FLEXIBLE PIPE COMPRISING SEALING SLEEVE WITH LIMITED CREEP

(30) Priorité: 10.08.1998 FR 9810254
(43) Date de publication de la demande: 06.06.2001
(73) Titulaire: COFLEXIP, 75116 Paris (FR)
(72) Inventeur: DUPOIRON, François, F-76360 Barentin (FR); ESPINASSE, Philippe, François, F-76420 Bihorel (FR); JUNG, Patrice, F-76940 La Mailleraye-sur-Seine (FR)
(74) Mandataire: Bertrand, Didier
(86) Numéro de dépôt international: FR9901893
(87) Numéro de publication internationale: WO0009930

(56) Documents cités:
- FR-A- 1 483 914
- FR-A- 2 217 621
- US-A- 4 167 645

## Description

La présente invention concerne une conduite flexible pour véhiculer sur de grandes distances un fluide sous pression et le cas échéant sous haute température, tel qu'un gaz, du pétrole, de l'eau ou d'autres fluides. L'invention vise tout particulièrement une conduite destinée à une exploitation pétrolière en mer. Elle vise notamment : d'une part les conduites de fond, dites "flow-lines", c'est-à-dire des conduites flexibles déroulées à partir d'un bateau pour être posées généralement sur le fond de la mer et connectées aux installations sous-marines, de telles conduites travaillant principalement en statique ; d'autre part, les colonnes montantes, dites "risers", c'est-à-dire des conduites flexibles déroulées à partir d'une installation de surface telle qu'une plate-forme et qui sont connectées aux installations sous-marines et dont la majeure partie ne repose pas sous le fond marin, de telles conduites travaillant essentiellement en dynamique.

Les conduites flexibles utilisées en mer doivent pouvoir résister à des pressions internes et/ ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les normes API 17 B et API 17 J établies par l'American Petroleum Institute sous l'intitulé "Recommended Practice for Flexible Pipe". On pourra aussi se reporter aux documents FR 2 654 795 A, WO 98/25 063 A, FR 2 744 511 A.

Une conduite flexible comprend généralement de l'intérieur vers l'extérieur :
- une gaine d'étanchéité interne réalisée en matière plastique, généralement polymère, résistant plus ou moins à l'action chimique du fluide à transporter;
- une voûte de pression résistant principalement à la pression développée par le fluide dans la gaine d'étanchéité et constituée par l'enroulement en hélice à pas court, autour de la gaine interne, d'un ou plusieurs fils métalliques de forme agrafés (auto-agrafables ou non) ;
- au moins une nappe (et généralement au moins deux nappes croisées) d'armures de traction dont l'angle d'armage mesuré sur l'axe longitudinal de la conduite est inférieur à 55° ; et
- une gaine de protection et d'étanchéité externe en polymère.

Une telle structure est celle d'une conduite à passage lisse, dite "smooth bore". Dans une conduite à passage non-lisse, dite "rough bore", on prévoit en outre à l'intérieur de la gaine d'étanchéité interne une carcasse constituée d'un feuillard agrafé qui sert à empêcher l'écrasement (en anglais "collapse") de la conduite sous pression externe.

La voûte de pression est constituée par un enroulement à spires non jointives pour doter la conduite d'une certaine flexibilité. Par spires non jointives, on entend des spires entre lesquelles est ménagé un certain espace ou interstice, dénommé par la suite "déjoint", et qui peut être d'autant plus grand que le fil de forme enroulé est gros.

Sous l'effet de la pression interne et/ou de la température développées par le fluide, la gaine d'étanchéité interne qui est relativement souple, est plaquée contre la face interne de la voûte de pression et a tendance à pénétrer dans un ou plusieurs déjoints entre spires. La tendance à la pénétration ou fluage de la gaine d'étanchéité augmente avec la durée et/ou les conditions sévères d'utilisation de la conduite flexible, par exemple lorsque le fluide à véhiculer circule sous forte pression (plusieurs centaines de bars) et/ou forte température (supérieure à 100°C), une température élevée diminuant généralement la rigidité de la gaine d'étanchéité interne. Lorsque la gaine d'étanchéité pénètre progressivement dans les déjoints, il se produit soit des craquelures affectant ainsi la fonction d'étanchéité de la gaine interne, soit même une ou plusieurs ruptures locales de la gaine interne, la conséquence de tels incidents étant une intrusion du fluide à l'extérieur de la gaine interne qui n'assure plus l'étanchéité requise.

Pour limiter ou tenter d'empêcher le fluage de la gaine interne dans les déjoints entre spires de la voûte de pression, plusieurs solutions ont été proposées, comme le choix d'un matériau plus épais et/ou plus résistant pour la gaine, ce qui entraîne généralement une augmentation du prix de revient de la conduite et souvent une complication de sa fabrication. Une solution très intéressante a été proposée dans le document FR 2 744 511 A, qui consiste à enrouler autour de la gaine d'étanchéité un ruban anti-fluage ayant des caractéristiques spécifiques, ce ruban venant former une sous-couche située sous la face interne de la voûte de pression, mais l'efficacité de cette solution rencontre des limites aux pressions élevées et aux diamètres de flexible élevés.

Le problème lié au fluage entre déjoints s'aggrave avec les conduites utilisées en grande profondeur. En effet, les fils de forme utilisés pour les voûtes de pression des conduites destinées aux profondeurs faibles et moyennes et aux diamètres faibles ou moyens de flexible (typiquement moins de 12 pouces, c'est-à-dire 30 cm) sont de section relativement faible et ils forment après enroulement et agrafage un volume annulaire relativement compact entre sa face interne et sa face externe, en dépit de la présence de déjoints qui restent faibles (typiquement de l'ordre de 1 mm à 5 mm). Pour les conduites de grande profondeur et/ou de grand diamètre (typiquement plus de 30 cm), on est conduit à utiliser un fil de forme de section plus grosse présentant une plus grande inertie ; les déjoints augmentent alors (ils peuvent atteindre environ 10 mm) et la solution préconisée dans le document FR 2 744 511 A n'est plus valable. Pour limiter le poids d'une telle conduite en grande profondeur, on souhaiterait pouvoir utiliser des profils à section en H ou en I, dont le rapport inertie/poids est nettement plus avantageux que les profils de section typique en T, U, Z et leurs variantes. Ces profils ont déjà été proposés dans le cadre spécifique du flexoforage, par exemple par le document FR 2 229 913 A. De tels fils donnent après enroulement un volume annulaire de voûte moins compact que celui qu'on obtiendrait avec des fils de section en T, U ou Z de même diamètre ; la voûte est allégée, puisqu'elle présente entre ses faces interne et externe un volume de vide, hélicoïdal, sensiblement confiné, délimité par les ailes en regard du fil enroulé et son âme enroulée sensiblement radialement. Cependant, avec des fils de grosse section et présentant entre spires non jointives un large déjoint, la présence de ce volume juste à l'arrière du déjoint interne aggrave les risques de fluage en quantité importante, puisque ce volume constitue une issue presque illimitée à la matière qui flue par un déjoint. On a pu proposer dans le cadre du flexoforage et dans un but différent (assurer l'étanchéité de la voûte) de remplir ce volume d'une matière légère et élastique telle que le caoutchouc, mais cette solution entraîne une rigidité excessive de la conduite ; en effet le caoutchouc, volumiquement incompressible, et confiné dans ledit volume hélicoïdal de la voûte de pression, est sensiblement indéformable et s'oppose à la flexibilité de la conduite.

Le problème du fluage de la gaine d'étanchéité interne d'une conduite flexible adaptée aux grandes profondeurs ou aux grands diamètres n'est donc pas résolu aujourd'hui et le but de l'invention est précisément de le résoudre.

La présente invention atteint son but grâce à une conduite tubulaire flexible de type "rough bore" ou "smooth bore", c'est-à-dire comprenant au moins, de l'intérieur vers l'extérieur, une gaine d'étanchéité interne en matière polymère, une voûte de pression cylindrique présentant une face externe et une face interne disposée au-dessus de la gaine interne, la voûte étant constituée par l'enroulement en hélice à pas court et avec déjoint entre spires d'un fil métallique de forme agrafé, au moins une nappe d'armures de traction enroulées à pas long et une gaine de protection et d'étanchéité externe en polymère, caractérisée en ce que la voûte comprend un élément-cache allongé masquant au moins partiellement les déjoints du fil de forme en regard de la gaine interne. L'élément-cache allongé, de préférence plat, est disposé hélicoïdalement avantageusement dans et à l'arrière de la face interne de la voûte de pression de manière à ne pas faire saillie par rapport au volume annulaire de la voûte. Ainsi réalise-t-on un confinement radial en épaisseur des déjoints et le risque de fluage de certaines zones de la gaine interne dans les déjoints de la voûte métallique est minimisé. On voit qu'à la différence du ruban anti-fluage connu qui constituait une couche supplémentaire et intermédiaire entre la gaine d'étanchéité et la voûte de pression, l'élément-cache de la présente invention est une partie constitutive de la voûte elle-même et y est intégré, même s'il peut être réalisé sous forme rapportée ; en effet, selon les deux modes principaux de réalisation de l'invention, l'élément-cache de l'invention est réalisé par un fil rapporté inséré dans la face interne de la voûte ou bien par des parties du fil de forme lui-même en recouvrement au niveau de la face interne de la voûte.

L'invention est applicable à toutes sortes de sections de fil, auto-agrafables ou non (et dans ce dernier cas agrafés par un fil d'agrafage). Avantageusement cependant, le fil de forme de la voûte de pression est à section allégée, en H couché ou en I debout ; l'âme du profil est enroulée sensiblement radialement et ses ailes définissent le volume confiné dont l'accès est interdit par l'élément-cache qui barré le déjoint au niveau de la face interne de la voûte.

L'invention sera bien comprise à l'aide de la description qui suit, en référence aux dessins schématiques annexés représentant à titre d'exemple des formes de réalisation de la conduite flexible selon l'invention. D'autres avantages et caractéristiques seront mis en évidence à la lecture de la description.

La figure 1 est une vue en perspective schématique montrant les couches successives d'une conduite (ici de type "smooth bore") à laquelle s'applique l'invention.

La figure 2 est une vue partielle en coupe longitudinale d'une conduite flexible de l'art antérieur comportant une gaine interne ayant flué dans un déjoint de la voûte métallique formée d'un fil métallique en H enroulé en hélice.

La figure 3 est une vue partielle en coupe longitudinale d'un premier mode de réalisation d'une conduite flexible selon l'invention, la voûte métallique étant formée d'un fil métallique en H enroulé en hélice et l'élément-cache étant réalisé sous forme de fil plat enroulé hélicoïdalement.

La figure 4 est une vue partielle en coupe longitudinale d'un second mode de réalisation selon l'invention, la voûte métallique étant formée d'un fil métallique en H enroulé en hélice et l'élément-cache étant réalisé sous forme de parties en recouvrement formées à la base même du fil métallique de voûte.

Les figures 5 et 6 d'une part, 7 et 8 d'autre part sont analogues aux figures 3 et 4 en remplaçant le fil métallique de voûte en H respectivement par un fil en "zeta" et en "teta".

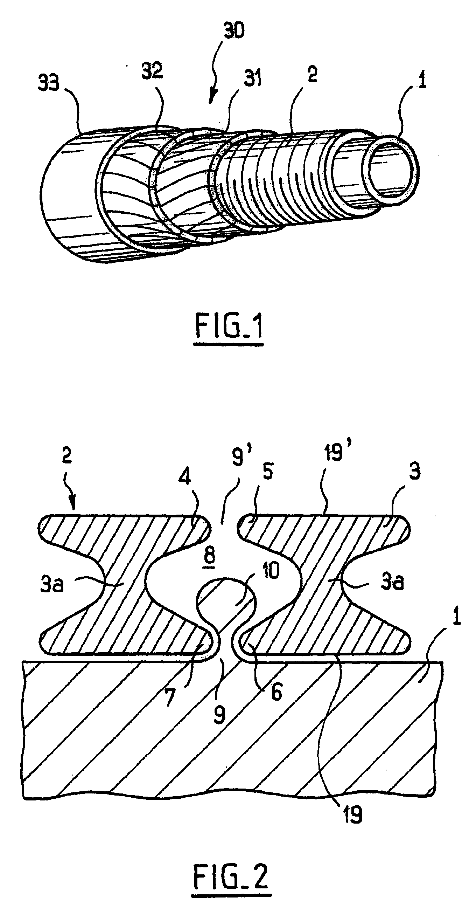

Il est à noter que les figures 2 à 8 sont des vues partielles schématiques de conduites dont les espaces entre les éléments constitutifs ont été volontairement exagérés pour une meilleure clarté des dessins.

Comme le montre la figure 1, et de manière générale, une conduite de type "smooth bore" comprend de l'intérieur vers l'extérieur une gaine d'étanchéité interne polymérique 1, une voûte métallique 2 constituée par l'enroulement en hélice d'au moins un fil métallique de forme, une armure 30 résistant à la traction axiale dans le sens longitudinal de la conduite et habituellement constituée d'une ou plusieurs paires de nappes croisées 31, 32 d'enroulement en sens contraire, et d'une gaine d'étanchéité externe polymérique 33. D'autres couches non représentées peuvent être prévues, selon le type et la destination de la conduite, comme par exemple une carcasse interne sous la gaine interne d'étanchéité 1 (conduite dite "rough bore" qui sont le type préféré d'application de l'invention), une couche de frette constituée par un enroulement à pas court de fil rectangulaire interposée entre la voûte de pression 2 et la première nappe d'armure 31, et des gaines intermédiaires disposées entre diverses nappes d'armures.

Comme le montre la figure 2, le souci d'alléger la voûte de pression 2 des conduites destinées à résister aux fortes pressions et utilisant de ce fait un fil de forme 3 de grosse section et donc de grande inertie, conduit à utiliser comme fil de forme un fil profilé à section en H couché (ou I debout) qui présente une âme 3a et des ailes 4, 5, 6 et 7, l'âme 3a étant enroulée sensiblement radialement sur et autour de la gaine interne 1 en une hélice à pas court, les ailes externes 4, 5 et les ailes internes 6, 7 des spires consécutives étant en regard et formant conjointement un volume sensiblement confiné 8 traversant hélicoïdalement la voûte 2. Sur cette figure, on n'a pas représenté l'agrafage du fil, qui est cependant nécessaire, et qui est réalisé soit par auto-agrafage grâce à un profil spécial donné au fil de forme, soit par un fil d'agrafage rapporté qu'on préfère disposer sur la face extérieure de la voûte (agrafage dit « par le haut ») à la fois pour des raisons de facilité de fabrication et de meilleure résistance de la conduite, notamment pour son utilisation en dynamique (colonne montante). C'est pourquoi les figures de l'invention 3, 4, 7 et 8 qui suivront montrent un agrafage par le haut.

Pour donner de la flexibilité à la conduite, l'enroulement en hélice du fil métallique 3 est fait en laissant des déjoints hélicoïdaux internes 9 et externes 9' au niveau des faces respectivement interne 19 et externe 19' de la voûte de pression, ces déjoints s'ouvrant sur le volume interne 8. Entre les ailes 6 et 7 de deux spires consécutives en regard de la gaine interne 1, celle-ci risque de fluer, pouvant même aller jusqu'à introduire une portion 10 de ladite gaine interne 1 dans le volume 8 entre les spires consécutives du fil métallique profilé 3. C'est ce phénomène que l'invention vise à combattre.

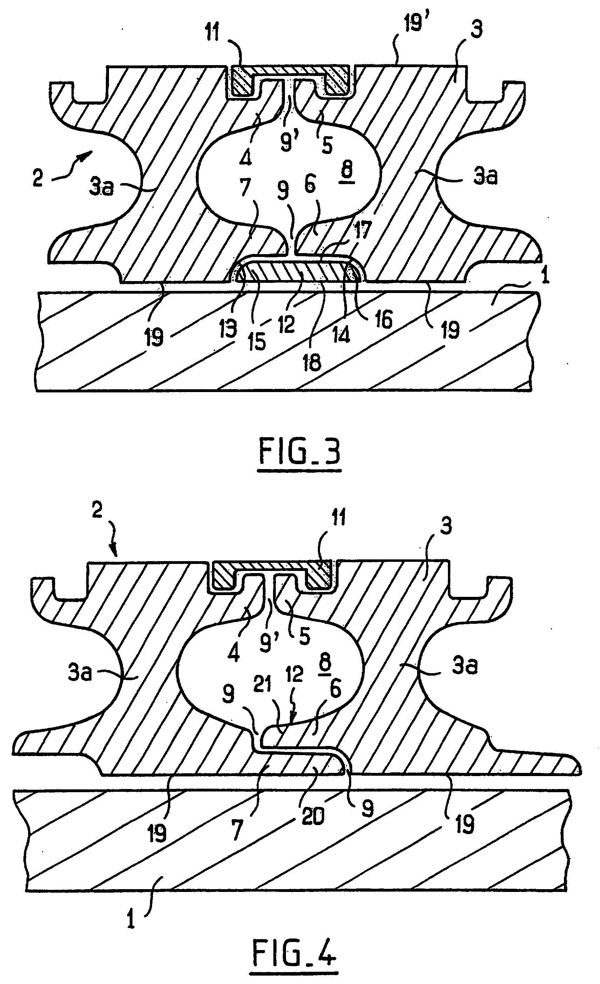

Dans le mode de réalisation représenté sur la figure 3, le fil métallique 3 en H couché de la voûte de pression 2 de la conduite flexible est agrafé par une agrafe 11 au niveau de la face externe 19' de la voûte ; l'agrafe 11 est constituée d'un fil en U plat enroulé hélicoïdalement dans des évidements de la face externe 19' de la voûte 2, c'est-à-dire au niveau des ailes 4 et 5 extérieures du fil métallique 3, et elle relie les spires consécutives du fil métallique 3 enroulé en hélice au niveau de ces ailes extérieures 4 et 5. L'agrafe 11 est avantageusement disposée en léger retrait par rapport au volume enveloppe de la face externe 19' de manière à éviter que les couches d'armure ne portent sur l'agrafe 11, entraînant des risques de fatigue induite en utilisation dynamique.

Un élément-cache 12 indépendant constitué d'un fil plat enroulé hélicoïdalement dans la face intérieure 19 de la voûte 2, au niveau des ailes intérieures 6 et 7 du fil métallique 3, vient masquer le déjoint interne 9 tout en étant intégré de manière compacte au sein de la voûte métallique 2 grâce à des parties évidées 13 et 14 en regard ménagées sur la longueur des ailes 6 et 7 des spires consécutives du fil métallique 3 les plus internes à la conduite. Ces parties évidées 13 et 14 sont sensiblement en correspondance de forme avec ledit élément-cache 12 de sorte que ce dernier 12 puisse aisément s'y loger au moins partiellement. On notera que l'élément-cache 12 est tout entier à l'intérieur du volume enveloppe de la voûte 2, laquelle porte sur la gaine intérieure 1 par sa face intérieure 19 constituée par la base intérieure du profil enroulé 3, de sorte que l'élément-cache 12 n'est pas comprimé entre ladite gaine 1 et la voûte métallique 2.

La surface radialement extérieure 17 de l'élément-cache 12 en regard de la voûte métallique 2 comporte avantageusement des bords arrondis 15 et 16 ou est de forme bombée pour un contact doux avec ledit fil métallique 3 et pour réduire le risque d'insertion dudit élément-cache 12 dans le déjoint 9. D'autre part, les parties évidées 13 et 14 de la voûte métallique 2 sont situées en regard de la gaine interne 1 pour faciliter la mise en place de l'élément-cache 12 par spiralage simultanément avec le spiralage du fil de forme 3.

L'élément-cache 12 est avantageusement constitué d'un fil en métal téflonné ou en plastique dur.

Dans un autre mode de réalisation de l'invention également avec agrafage de la voûte par le haut, on prévoit que l'élément-cache 12 est constitué de parties 20, 21 superposées du fil métallique 3 lui-même enroulé en hélice s'étendant à partir de ses ailes intérieures 6, 7 comme représenté sur la figure 4. Ces parties 20, 21 se chevauchent longitudinalement de sorte qu'elles admettent la formation du déjoint longitudinal 9, mais en revanche ne laissent pratiquement pas de passage dans le sens de l'épaisseur des ailes, de manière à barrer l'accès entre la gaine 1 et le volume confiné 8.

Ces deux modes de réalisation de l'élément-cache, sous forme de fil plat rapporté ou de parties en chevauchement à la base du fil de forme, s'appliquent à d'autres sections de fil de forme que les sections allégées en H ou I.

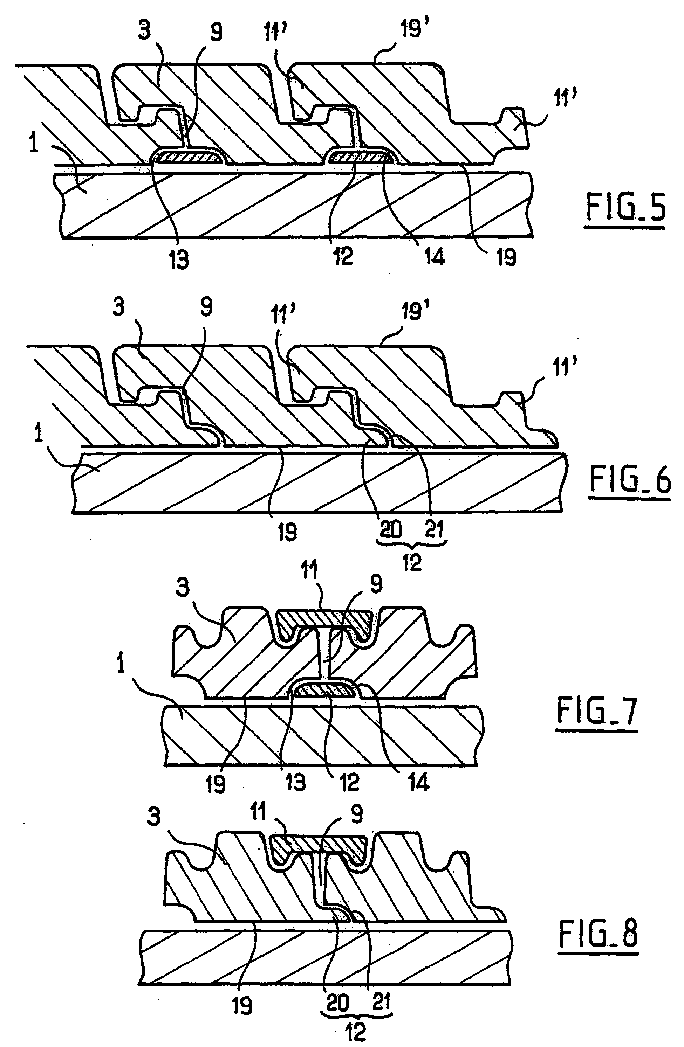

Ainsi les figures 5 et 6 montrent l'application de l'invention à un fil de forme en zêta 3 auto-agrafable grâce à ses parties 11' situées généralement au voisinage d'un plan médian de l'épaisseur du fil 3. Dans la figure 5, des évidements 13 et 14 prévus dans la face interne 19 de la voûte de part et d'autre des déjoints 9 permettent de loger un fil plat 12 enroulé hélicoïdalement (à un certain intervalle . de ladite face interne 19 ). Dans la figure 6, la base du fil de forme 3 est profilée pour former deux parties 20 et 21 en chevauchement cylindrique qui constituent l'élément-cache 12 barrant le déjoint 9.

Les figures 7 et 8 montrent de même l'application de l'invention à une voûte réalisée avec un fil de forme 3 à section en teta agrafé par le haut avec un fil d'agrafage 11.

## Revendications

1. Conduite tubulaire flexible comprenant au moins, de l'intérieur vers l'extérieur, une gaine d'étanchéité interne (1) en matière polymère, une voûte de pression cylindrique (2) présentant une face externe (19') et une face interne (19) disposée au-dessus de la gaine interne (1), la voûte (2) étant constituée par l'enroulement en hélice à pas court et avec déjoint entre spires d'un fil métallique de forme (3) agrafé, au moins une nappe (30) d'armures de traction enroulées à pas long et une gaine (33) de protection et d'étanchéité externe en polymère; **caractérisée en ce que** la voûte(2) comprend un élément-cache allongé (12) masquant au moins partiellement les déjoints (9) du fil de forme (3) en regard de la gaine interne (1).

2. Conduite flexible selon la revendication 1, **caractérisée en ce que** l'élément-cache est un fil rapporté (12) enroulé en hélice dans un évidemment (13, 14) prévu dans le fil de forme (3).

3. Conduite flexible selon l'une quelconque des revendications 1 ou 2, **caractérisée en ce que** l'élément-cache (12) est constitué de parties (20, 21) en chevauchement du fil métallique de forme (3) et s'étendant à la base du fil.

4. Conduite flexible selon l'une quelconque des revendications 1 à 3, **caractérisée en ce que** le fil métallique enroulé en hélice (3) est agrafé au niveau de la face externe (19') de la voûte métallique (2).

5. Conduite flexible selon l'une quelconque des revendications 1 à 4, **caractérisée en ce que** le fil métallique (3) présente une section en H couché ou en I debout, avec une âme (3a) et des ailes intérieures et extérieures (4, 5, 6, 7), l'âme (3a) étant enroulée sensiblement radialement et les ailes (4, 5, 6, 7) de spires consécutives étant en regard et formant conjointement un volume sensiblement confiné (8), l'élément-cache (12) étant logé au moins partiellement dans les ailes intérieures (6, 7) du fil métallique (3) de manière à barrer le passage entre la gaine d'étanchéité (1) et le volume intérieur (8).

6. Conduite flexible selon la revendication 5, **caractérisée en ce que** les parties évidées (13, 14) du fil métallique enroulé en hélice (3) sont situées en regard de la gaine interne (1).

7. Conduite flexible selon l'une quelconque des revendications 5 ou 6, **caractérisée en ce que** l'élément-cache (12) présente sur une surface (17) en regard de la voûte métallique (2) des bords (15, 16) qui sont arrondis.

8. Conduite flexible selon l'une quelconque des revendications précédentes, **caractérisée en ce que** l'élément-cache (12) en regard de la gaine interne (1) ne fait pas saillie vers la gaine (1) hors de la voûte métallique (2) au niveau de sa face interne (19).

9. Conduite flexible selon l'une quelconque des revendications précédentes, **caractérisée en ce que** l'élément-cache (12) est en métal téflonné où en plastique dur.

## Claims

1. A flexible tubular pipe comprising at least, from the inside outward, an internal sealing sheath (1) made of a polymer material, a cylindrical pressure vault (2) having an external face (19') and an internal face (19) placed over the internal sheath (1), the vault (2) consisting of the winding of an interlocked profiled metal wire (3) wound in a helix with a short pitch and with a gap between the turns, at least one ply (30) of tensile armor layers wound with a long pitch, and an external protective sealing sheath (33) made of a polymer, **characterized in that** the vault (2) includes an elongate overlay element (12) at least partially masking the gaps (9) of the profiled wire (3) facing the internal sheath (1).

2. The flexible pipe as claimed in claim 1, **characterized in that** the overlay element is an attached wire (12) wound in a helix in a recess (13, 14) provided in the profiled wire (3).

3. The flexible pipe as claimed in either of claims 1 and 2, **characterized in that** the overlay element (12) consists of parts (20, 21) overlapping the profiled metal wire (3) and lying at the base of the wire.

4. The flexible pipe as claimed in any one of claims 1 to 3, **characterized in that** the helically wound metal wire (3) is interlocked on the external face (19') of the metal vault (2).

5. The flexible pipe as claimed in any one of claims 1 to 4, **characterized in that** the metal wire (3) has a cross section in the form of an H on its side or in the form of an upright I, with a web (3a) and inner and outer flanges (4, 5, 6, 7), the web (3a) being wound approximately radially and the flanges (4, 5, 6, 7) of consecutive turns facing and together forming a substantially confined volume (8), the overlay element (12) being at least partially housed in the inner flanges (6, 7) of the metal wire (3) so as to bar the passage between the sealing sheath (1) and the internal volume (8).

6. The flexible pipe as claimed in claim 5, **characterized in that** the recessed parts (13, 14) of the helically wound metal wire (3) lie facing the internal sheath (1).

7. The flexible pipe as claimed in either of claims 5 and 6, **characterized in that** the overlay element (12) has, on a surface (17) facing the metal vault (2), edges (15, 16) which are rounded.

8. The flexible pipe as claimed in any one of the preceding claims, **characterized in that** the overlay element (12) facing the internal sheath (1) does not project toward the sheath (1) beyond the metal vault (2) on its internal face (19).

9. The flexible pipe as claimed in any one of the preceding claims, **characterized in that** the overlay element (12) is made of a PTFE-coated metal or of a hard plastic.

## Patentansprüche

1. Flexible Rohrleitung, wenigstens von innen nach außen bestehend aus einem inneren Dichtrohr (1) aus einem polymeren Material, einem zylindrischen Metalldruckmantel (2) mit einer äußeren Fläche (19') und einer inneren Fläche (19), die auf dem inneren Dichtrohr (1) angeordnet ist, wobei der Mantel (2) durch spiralförmiges Wickeln mit geringer Steigung und einer Fuge zwischen den Windungen eines Metalldrahts (3) mit Klammerprofil gebildet ist, wenigstens einem Schlauch (30) aus mit großer Steigung gewickelten Zugarmierungen und einer äußeren und Schutz- und Dichtschale (33) aus polymerem Material,
**dadurch gekennzeichnet, daß**
der Mantel (2) ein Abdeckelement (12) aufweist, das die Fugen (9) des Profildrahts (3) wenigstens gegenüber dem inneren Rohr (1) wenigstens teilweise abdeckt.

2. Flexible Leitung nach Anspruch 1,
**dadurch gekennzeichnet, daß**
das Abdeckelement ein zusammengesetzter Draht (12) ist, der spiralförmig in eine Ausnehmung (13, 14) gewickelt ist, die im Profildraht (3) vorgesehen ist.

3. Flexible Leitung nach Anspruch 1 oder 2,
**dadurch gekennzeichnet, daß**
das Abdeckelement (12) aus überlappenden Abschnitten (20, 21) des Metallprofildrahts (3) gebildet ist und sich am unteren Ende des Drahtes erstreckt.

4. Flexible Leitung nach einem der Ansprüche 1 bis 3,
**dadurch gekennzeichnet, daß**
der spiralförmig aufgewickelte Metalldraht (3) in Höhe der Außenfläche (19') des Metallmantels (2) geklammert ist.

5. Flexible Leitung nach einem der Ansprüche 1 bis 4,
**dadurch gekennzeichnet, daß**
der Metalldraht (3) ein Querschnitt in Form eines liegenden H oder eines stehenden I mit einer Seele (3a) und inneren und äußeren Schenkeln (4, 5, 6, 7) hat, wobei die Seele (3a) im wesentlichen radial gewickelt ist und die Schenkel (4, 5, 6, 7) aufeinanderfolgende Windungen einander gegenüberliegen und zusammen ein im wesentlichen begrenztes Volumen (8) bilden, und wobei das Abdeckelement (12) wenigstens teilweise in den inneren Flügeln (6, 7) des Metalldrahts (3) derart aufgenommen ist, daß der Durchgang zwischen dem Dichtrohr (1) und dem inneren Volumen (8) blockiert ist.

6. Flexible Leitung nach Anspruch 5,
**dadurch gekennzeichnet, daß**
die vertieften Abschnitte (13, 14) des spiralförmig gewickelten Metalldrahtes (3) gegenüber dem inneren Rohr (1) liegen.

7. Flexible Leitung nach Anspruch 5 oder 6,
**dadurch gekennzeichnet, daß**
das Abdeckelement (12) auf einer Fläche (17) gegenüber dem Metallmantel (2) abgerundete Ränder (15, 16) hat.

8. Flexible Leitung nach einem der vorhergehenden Ansprüche,
**dadurch gekennzeichnet, daß**
das Abdeckelement (12) gegenüber dem inneren Rohr (1) in Richtung auf den Druckschlauch (1) in Höhe seiner inneren Fläche (19) nicht über den Metallmantel (2) vorsteht.

9. Flexible Leitung nach einem der vorhergehenden Ansprüche,
**dadurch gekennzeichnet, daß**
das Abdeckelement (12) aus teflonbeschichtetem Metall oder Hartkunststoff besteht.
